(19) Europäisches Patentamt
European Patent Office
Office européen des brevets

(11) **EP 1 277 062 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(21) Anmeldenummer: 01931394.9

(22) Anmeldetag: **03.04.2001**

(51) Int Cl.$^7$: **G01S 7/40**, G01S 13/93

(86) Internationale Anmeldenummer:
**PCT/DE2001/001263**

(87) Internationale Veröffentlichungsnummer:
**WO 2001/079879 (25.10.2001 Gazette 2001/43)**

(54) **VERFAHREN UND VORRICHTUNG ZUM ERMITTELN EINER FEHLAUSRICHTUNG DER STRAHLUNGSCHARAKTERISTIK EINES SENSORS ZUR GESCHWINDIGKEITS- UND ABSTANDSREGELUNG EINES FAHRZEUGS**

METHOD AND DEVICE FOR DETERMINING A MISALIGNEMENT OF THE RADIATION CHARACTERISTIC OF A SENSOR FOR AJUSTING THE SPEED AND DISTANCE OF A MOTOR

PROCEDE ET DISPOSITIF POUR DETERMINER UN MESALIGNEMENT DE LA CARACTERISTIQUE DE RAYONNEMENT D'UN CAPTEUR DE REGULATION DE VITESSE ET DE DISTANCE SUR UN VEHICULE

(84) Benannte Vertragsstaaten:
**DE GB IT**

(30) Priorität: **17.04.2000 DE 10019182**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
 • **SCHNEIDER, Hans-Peter**
  **70469 Stuttgart (DE)**
 • **WINNER, Hermann**
  **76229 Karlsruhe (DE)**
 • **LAUXMANN, Ralph**
  **70825 Korntal-Muenchingen (DE)**
 • **LUEDER, Jens**
  **70806 Kornwestheim (DE)**

(56) Entgegenhaltungen:
 EP-A- 0 782 008        EP-A- 0 899 581
 DE-A- 19 746 524       DE-A- 19 934 197
 DE-A- 19 952 056       US-A- 5 495 254
 US-A- 6 026 353

 • PATENT ABSTRACTS OF JAPAN vol. 1997, no. 04, 30. April 1997 (1997-04-30) & JP 08 327722 A (FUJITSU TEN LTD), 13. Dezember 1996 (1996-12-13)
 • PATENT ABSTRACTS OF JAPAN vol. 2000, no. 14, 5. März 2001 (2001-03-05) & JP 2000 321350 A (TOKYU CAR CORP), 24. November 2000 (2000-11-24)

EP 1 277 062 B1

**Beschreibung**

Stand der Technik

Die vorliegende Erfindung beschreibt ein Verfahren und eine Vorrichtung zum Detektieren und/oder Korrigieren einer Dejustage eines Abstandssensors an einem Fahrzeug. Einzelne Verfahren und Vorrichtungen zur Dejustageerkennung sind seit langerem bekannt, auch mit der Funktion, ihren Sensorsichtbereich selbst korrigieren zu können.

So offenbart die DE 197 46 524 AI eine Kompensationseinrichtung zur Kompensation der Einbautoleranzen eines Abstandssensors an einem Fahrzeug. Dies geschieht, indem die Auswerteelektronik die Objektentfernungen und die Objektwinkel der detektierten Objekte registriert. Diese Daten werden über eine vorgebbar lange Zeit gemittelt und der somit ermittelte Objektwinkelmittelwert als neuer Sollrichtungswinkel des vorausfahrenden Fahrzeugs angenommen. Weiterhin berechnet sich ein Korrekturwinkel aus der Differenz des Sollrichtungswinkels und des Istrichtungswinkels. Mit diesem Differenzwinkel werden die erfaßten Objektwinkel korrigiert.

Aus der DE 199 52 056 A1 ist ein Abstandssensor mit einer Kompensationseinrichtung für einen Dejustagewinkel an einem Fahrzeug bekannt. Der Sensor weist Mittel auf, mit denen bei einer Fahrt, nicht nur auf einer geraden Straße, sondern auch in Kurven Dejustagewinkel und Trajektorienkrümmungen kompensierbar sind. Bei einem aus der Mittelachse des Fahrzeugs versetzt angeordneten Sensor wird ein Winkel gemessen, der die verlängerte Mittelachse des Kraftfahrzeugs am Zielobjekt, eines vorausfahrenden Fahrzeug, schneidet. Durch eine zusätzliche Verwendung eines Gierratensensors werden auch Kurvenkrümmungen der Straße kompensiert, so dass die Winkel- und Abstandsmessung auch in Kurven erfolgen kann.

Aus der dem EP 0 899 581 A2 ist ein System zum automatischen Messen und Korrigieren eines Dejustagewinkels eines Fahrzeugs bekannt. Der Sensor stellt Daten bereit, die den Azimutwinkel und die Entfernung eines Zieles, beispielsweise eines Fahrzeugs, repräsentieren. Für jeden Winkelwert und Entfernungswert wird der Aufenthaltsort des Objekts geschätzt und nach einer Reihe derartiger Messungen wird eine Trajektorie geschätzt. Der Dejustagewinkel wird aus der Differenz der bestimmten Trajektorie und dem Fahrweg des Objekts geschätzt. Durch Subtraktion des Dejustagewinkels von den gemessenen Azimutwinkeln kann ein korrekter Azimutwinkel für das Objekt berechnet werden.

Die EP 0 782 008 A2 beschreibt eine Vorrichtung zur Berechnung und Korrektur der Abweichung der Mittelachse einer Hinderniserkennungsvorrichtung an einem Fahrzeug und eine Anlage zur Abstandsregelung zu einem vorausfahrenden Fahrzeug. Dieses System erkennt stehende Objekte und berechnet aus der zeitlichen Positionsverschiebung des stehenden Objektes relativ zum Sensor, ob das stehende Objekt eine Relativgeschwindigkeitskomponente besitzt, die orthogonal auf der Symmetrieachse des Sensorsichtbereiches, auch optische Achse genannt, steht. Im Fall eines exakt justierten Sensors ergibt eine zeitliche Mittelwertbildung dieser lateralen Relativgeschwindigkeit einen gegen Null strebenden Wert. Im Fall eines dejustierten Sensorsichtbereiches stellt sich mittels der zeitlichen Mittelwertbildung ein Wert ungleich Null ein, der durch seine Größe, bei Kenntnis der Fahrzeugeigengeschwindigkeit, einen Rückschluß auf den Dejustagewinkel des Sensors zuläßt. Mit diesem verfahren läßt sich eine Dejustage des Sensors erkennen und die Sensordejustage korrigieren.

Beide Verfahren besitzen eine Einrichtung bzw. ein Verfahren um eine Dejustage zu erkennen und beide Verfahren korrigieren bei erkannter Dejustage derart, indem auf die gemessenen Objektwinkel ein aus den Meßwerten ermittelter Korrekturwinkel addiert wird. Dadurch wird die Symmetrieachse des Sensorsichtbereiches rechnerisch so geschwenkt, daß sie in etwa mit der Mittelachse des Fahrzeugs zusammenfällt.

Aufgabe, Lösung und Vorteile der Erfindung

Sämtlichen bekannten Verfahren und Vorrichtungen zur Dejustageerkennung von Abstandssensoren ist gemein, daß sie in bestimmten Fahrsituationen gute Ergebnisse liefern und in anderen Fahrsituationen Ergebnisse mit nicht zu vernachlässigenden Fehlern liefern. Es existieren daher fur jedes System vorteilige und nachteilige Fahrzustande.

Gegenstand der Erfindung ist es nun, zwei oder mehrere unterschiedlich ausgeprägte Einzelverfahren zur Dejustageerkennung gleichzeitig in Kombination ablaufen zu lassen und den Fahrzustand zu überwachen bzw. eine Vorrichtung zu betreiben, die sich zweier oder mehrerer Einzelverfahren bedient. Zweckmäßigerweise sind diese Einzelverfahren so ausgepragt, daß in jedem Fahrzustand mindestens ein Verfahren zuverlässige Werte liefert. Dadurch kann die Schwäche eines Verfahrens, nämlich daß es in diesem Fahrzustand unzuverlässige Werte liefert, durch die Stärke eines anderen Verfahrens kompensiert werden, da dieses in diesem Fahrzustand zuverlässige Werte liefert. Zur Bewertung der Ergebnisse der Einzelverfahren wird aus dem aktuell vorliegenden Fahrzustand fur jedes Einzelverfahren eine Qualitätszahl gebildet, die zur Gewichtung der Ergebnisse der Einzelverfahren verwendet werden. Abhängig von den gewichteten Ergebnissen der Einzelverfahren sowie des Ergebnisses der Werteverknüpfung kann ein verknüpfter Dejustagewert festgestellt werden, der abhängig von diesen Werten korrigiert wird oder woraufhin das System aus Sicherheitsgründen abgeschaltet wird. Defekte der Sensorhardware äußern sich in Fehlerbildern, die durch spezielle Dejustagevektoren darstellbar sind. Ein derartiger Dejustagevektor besteht aus einer Linearkombination der Dejustagewerte der Einzelverfahren. Durch Überwachung des aktuellen Dejustagevektors können somit einige betriebswichtige Hardwarefunktionen des Sensors uberwacht werden. Diese Erfindung ist für horizontale und auch für vertikale Dejustageerkennung und/oder -korrektur geeignet. Im Fall, dass auch eine vertikale Dejustageerkennung und/oder -korrektur durchgeführt werden soll, muß der Sensor auch in der Lage sein, den Elevationswinkel der reflektierenden Objekte messen zu können.

Tritt ein Fahrzustand ein, in dem ein verwendetes Einzelverfahren unzuverlässige Meßwerte liefert, so werden die Resultate dieses Verfahrens zu diesem Zeitpunkt mit Hilfe einer Qualitätszahl schwächer gewichtet als ein anderes Einzelverfahren, das in dieser Fahrsituation verlässlichere Werte erwarten läßt. Durch eine derartige Kombination von Einzelverfahren ist es möglich, die Schwachpunkte eines Verfahrens durch die Stärken eines anderen Verfahrens auszugleichen. Des Weiteren ist es möglich, bei einer gemessenen Sensordejustage mit größerer Wahrscheinlichkeit voraussagen zu können, daß tatsächlich eine Dejustage vorliegt. Stellen beide Verfahren eine Dejustage fest, jedoch in unterschiedliche Winkelrichtungen, so kann dies an zu großen Einzelfehlern der Verfahren liegen. Treten hingegen Dejustagewerte in gleicher Winkelrichtung und in etwa gleichem Winkel von der Fahrzeugmittelachse aus auf, so kann man mit größerer Wahrscheinlichkeit als bei Verwendung nur eines Einzelverfahrens davon ausgehen, daß die Sensorachse tatsächlich verschoben ist. In diesem Fall kann man bei sehr viel kleineren Dejustagewerten bereits eine sichere Korrektur oder eine Abschaltung des Systems vornehmen, als dies bei einem Einzelverfahren möglich ist. Aufgrund dieser Erfindung ist der Betrieb eines abstandsgeregelten Fahrzeugs weit sicherer als der Betrieb eines Fahrzeugs mit einem Sensor der nur von einem Einzelverfahren gegen Dejustage überwacht wird. Weiterhin wird der Fehler infolge einer nachteiligen Umgebung sehr viel kleiner gehalten als bei einem Einzelverfahren, da zum Zeitpunkt der Messung durch die geringere Gewichtung des unzuverlässigeren Ergebnisses, das zuverlässigere Verfahren dominanter behandelt wird.

Zeichnung und Beschreibung eines Ausführungsbeispiels

Nachfolgend wird ein Verfahren und eine Vorrichtung des Ausführungsbeispiels näher erläutert.

Fig.1 zeigt die Draufsicht auf zwei, in der gleichen Fahrspur hintereinanderfahrende Fahrzeuge, wobei das folgende Fahrzeug mit eine erfindungsgemäßen Vorrichtung versehen ist.

Fig.2 zeigt ein Diagramm, das den Abschaltbereich des Systems, in Abhängigkeit der beiden orthogonalen Einzelverfahren, skizziert.

Fig.3 zeigt ein Blockschaltbild eines erfindungsgemäßen Ausführungsbeispiels.

Fig.4 zeigt ein weiteres Blockschaltbild eines zweiten erfindungsgemäßen Ausführungsbeispiels.

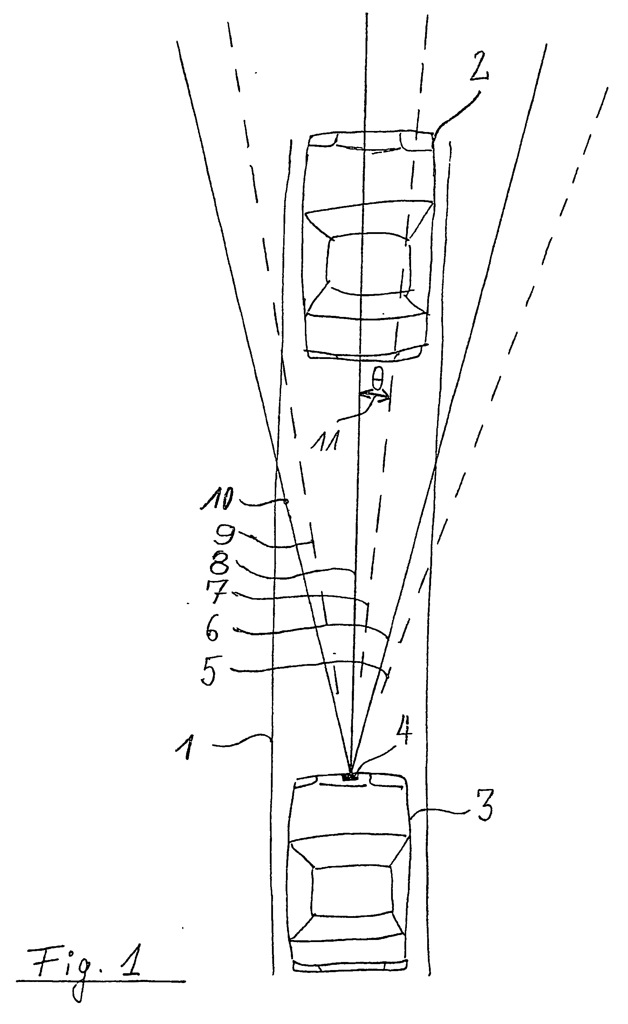

In Fig.1 erkennt man eine Fahrspur 1, auf der zwei Fahrzeuge 2 und 3 hintereinander fahren, dergestalt, daß Fahrzeug 3 Fahrzeug 2 folgt. Fahrzeug 3 ist mit einem Sensor 4 zur Geschwindigkeits- und Abstandsregelung ausgerüstet, der den erfindungsgemäßen Gegenstand beinhaltet.

Halbgerade 8 stellt die Mittelachse des Fahrzeugs 3 dar, die im Falle eines exakt justierten Sensors identisch mit der Symmetrieachse des Sensorsichtbereiches 7 ist. Dies ist auch die Hauptstrahlrichtung der Strahlungscharakteristik des Sensors. Die Halbgeraden 6 und 10 stellen den rechten bzw. den linken Rand des sektorförmigen Sensorsichtbereiches dar, wobei die Halbgerade 8 genau die Winkelhalbierende der beiden Halbgeraden 6 und 10 ist. Die Linien, die einen exakt justierten Sensorbereich markieren (6,8,10), wurden in Fig.1 mit durchgezogenen Linien dargestellt.

Im Falle eines horizontal dejustierten Sensors, d.h. die Fehlausrichtung der Strahlungscharakteristik wurde ungleich Null ermittelt, stellt sich der Sensorsichtbereich gemäß den unterbrochenen Linien 5, 7 und 9 dar. Diese Halbgeraden unterscheiden sich von den Halbgeraden 6, 8 und 10 lediglich darin, daß diese, gemäß Fig.1 um den horizontalen Dejustagewinkel Theta verdreht sind. Hierbei stellt die Halbgerade 5 den rechten Rand des Sensorsichtbereiches und Halbgerade 9 den linken Rand des Sensorsichtbereiches dar. Die Halbgerade 7 markiert die Winkelhalbierende zwischen den Halbgeraden 5 und 9 und damit die Mittelachse des sektorförmigen Sensorsichtbereiches. Der Winkel Theta 11 gibt an, um welche Drehung der Sensor dejustiert ist. Zweckmäßigerweise wird dieser Winkel zwischen der Fahrzeugmittelachse und der Symmetrieachse des Sensorsichtbereiches gemessen. Innerhalb des Sensorsichtbereiches wird eine elektromagnetische Welle, vorzugsweise ein Radar- oder ein Lidarsignal abgestrahlt. Objekte, die sich in diesem Sensorsichtbereich befinden streuen eine reflektierte Welle zurück, die mit entsprechender Laufzeitverzögerung am Sensor detektiert wird. Der Winkel unter dem ein reflektiertes Signal abgestrahlt und empfangen wird, wird als Objektwinkel bezeichnet und als Objektwinkelwert weiterverarbeitet. Durch die Objektentfernung, und dem Objektwinkel sind sämtliche Objekte im Sensorsichtbereich bekannt. Aus diesen Objekten wird ein Zielojekt ausgewählt, zweckmäßigerweise wählt man dazu das Objekt, das entfernungsmäßig am Nächsten ist und sich möglichst in der Nähe der Fahrzeuglängsachse aufhält.

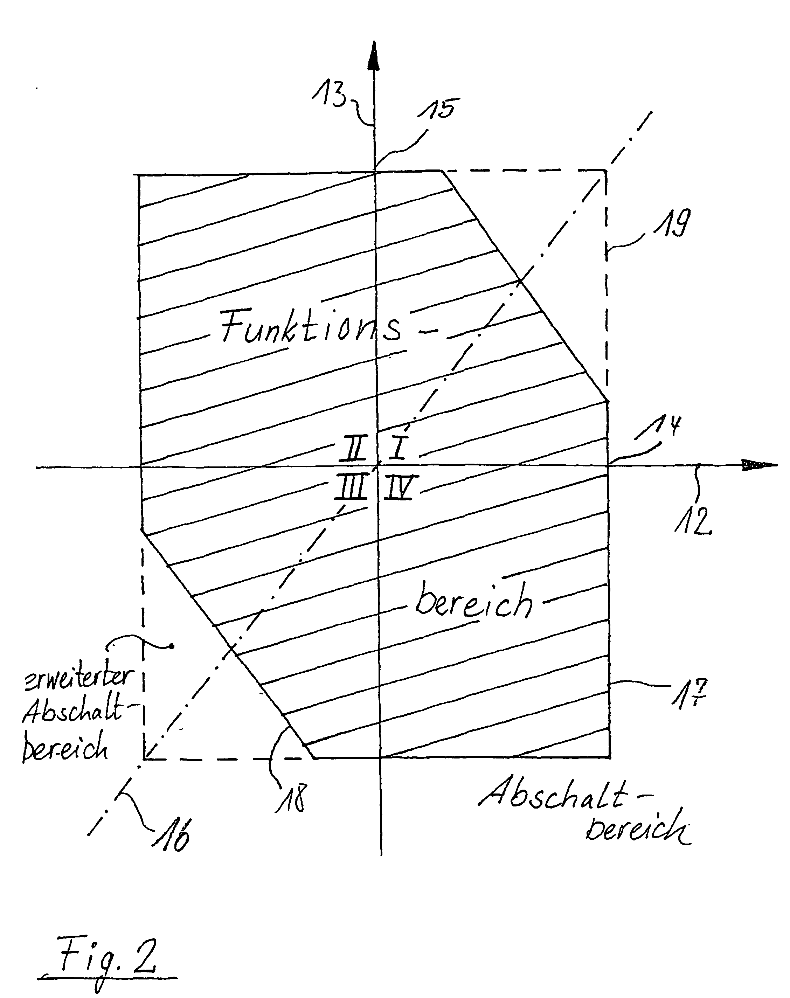

In Fig.2 ist ein 2-dimensionales Diagramm, das den Abschaltbereich sowie den Funktionsbereich skizziert. Die beiden Koordinatenachsen 12 und 13 bilden ein Orthogonalsystem. Hier wird auf jeder Achse der momentane Dejustagewert eines der beiden Einzel-

verfahren aufgetragen, wodurch die Dejustagewert-kombination der momentanen Einzeldejustagewerte durch einen Punkt im zweidimensionalen Fehlerraum dargestellt werden kann.

In diesem Ausführungsbeispiel wird zweckmäßigerweise auf der Koordinatenachse 12 der normierte Fehler der Langzeitfilterung des Zielobjektkursversatzes aufgetragen. Die Normierung geschieht dabei derart, daß der maximal tolerierbare Fehler d_alpha_obj_max dieses Verfahrens durch den Punkt 14 markiert wird. Analog wird auf der Koordinatenachse 13 der normierte Dejustagewert der Regressionsanalyse von Trajektorien aufgetragen. Die Normierung geschieht hier wieder in gleicher Weise, so daß der maximal tolerierbare Dejustagewert dieses Verfahrens d_alpha_traj_max durch den Punkt 15 markiert wird. Werden nun beide Verfahren zur Dejustageerkennung getrennt voneinander ausgewertet, so erhält man ein Rechteck, dessen Mittelpunkt dem Koordinatenursprung entspricht. Liegt nun der momentane Dejustagepunkt im Inneren dieses Rechteckes, das bedeutet, daß beide Einzelfehler zeitgleich unterhalb der jeweiligen Grenzwerte liegen, so kann davon ausgegangen werden, daß die Dejustagewerte durch nicht-optimale Fahrsituationen zustande kommen und der Sensorsichtbereich nachjustiert werden kann.

Nun kann man beide Verfahren miteinander kombinieren. Zeigen beide Verfahren Fehler mit dem gleichen Vorzeichen an, dies bedeutet, daß der Fehlerpunkt im Quadranten I oder III liegt, dabei noch möglichst in der Nähe der Geraden 16, so erkennen beide Verfahren in etwa den gleichen Dejustagewert und man kann mit größerer Wahrscheinlichkeit als bei der Verwendung von einem Einzelverfahren von einer tatsächlichen Fehlstellung der Strahlungscharakteristik gegenüber der Fahrzeuglängsachse ausgehen. Aus diesem Grund kann man in diesen Bereichen, also im I. und im III. Quadranten den Funktionsbereich einschränken, indem ein Teil des Funktionsbereiches entfernt wird. Dieser Bereich, der nun zum Abschaltbereich gehört wird auch "erweiterter Abschaltbereich" genannt.

Es ist noch zu bemerken, daß die Grenzen zwischen Funktionsbereich und Abschaltbereich 17 sowie zwischen Funktionsbereich und erweitertem Abschaltbereich 18 sowie zwischen Abschaltbereich und erweitertem Abschaltbereich 19 in allen 4 Quadranten in Fig.2 aus Vereinfachungsgrunden als gerade Linien dargestellt wurden, aber in der Praxis als beliebige Kurven ausgeführt werden können.

Ebenso kann man noch weitere "erweiterte Abschaltbereiche" einführen um die Grenze des Funktionsbereiches bzw. der Funktionsbereiche beliebig modellieren zu können.

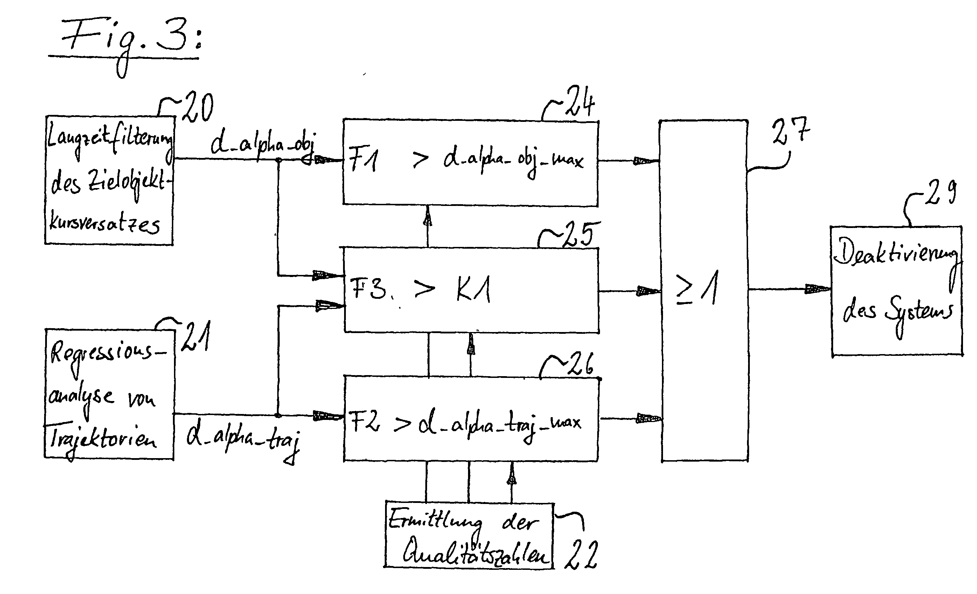

Die Funktionsweise dieses Kombinationsverfahrens wird in Fig.3 aufgezeigt. Die beiden Einzelverfahren "Langzeitfilterung des Zielobjektkursversatzes" 20 sowie "Regressionsanalyse von Trajektorien" 21 berechnen jeweils einen momentanen Dejustagewerte d_alpha_obj bzw. d_alpha_traj. Diese beiden Werte werden an die Funktionsblöcke 24, 25 und 26 gemäß Fig.3 weitergegeben.

Gleichzeitig wird aus gemessenen Fahrdynamikdaten anderer Systeme und/oder zusätzlichen Fahrzeugdaten die Fahrsituation ermittelt. Dabei wird festgestellt, ob das Fahrzeug geradeaus oder durch eine Kurve fährt, ob es bergauf oder bergab fährt oder ob weitere, die Meßverfahren beeinträchtigende Bedingungen erfüllt sind, indem zweckmäßigerweise ein Gierratensignal, ein Nicksignal oder weitere, die Fahrdynamik beschreibende Signale herangezogen werden. Aus der ermittelten Fahrsituation wird im Funktionsblock 22 für jedes Verfahren eine Qualitätszahl bestimmt. Die Qualitätszahl für die Langzeitfilterung des Zielobjektkursversatzes wird als q_obj weitergegeben und die Qualitätszahl fur die Regressionsanalyse von Trajektorien als q_traj weitergegeben. Diese Qualitätszahlen werden an die Blöcke 24, 25 und 26 derart weitergegeben, daß der Block 25 beiden Qualitätszahlen q_obj und q_traj erhält, der Block 24 nur q_obj und Block 26 nur q_traj. In Block 25 wird nun mittels der Funktion

$$F3(d\_alpha\_obj, q\_obj, d\_alpha\_traj, q\_traj) > ...$$

$$... K1(d\_alpha\_obj\_max, \_alpha\_traj\_max),$$

die den anspruchsgemäßen "verknüpften Dejustagewert" darstellt, der erweiterte Abschaltbereich gebildet, wobei die beiden Dejustagewerte d_alpha_obj und d_alpha_traj mit Hilfe der Qualitätszahlen q_obj und q_traj gewichtet werden. Ist diese Gleichung erfüllt, liegt ein größerer Fehler vor, als erlaubt ist und es wird ein Abschaltwunsch an Block 27 weitergegeben.

In Block 24 wird mit dem Einzeldejustagewert d_alpha_obj und der zugehörigen Qualitätszahl q_obj geprüft, ob die Bedingung

$$F1(d\_alpha\_obj, q\_obj) > q\_alpha\_obj\_max$$

erfüllt ist. Ist dies der Fall, ist der Fehler größer als erlaubt und es wird der Abschaltwunsch an Block 27 weitergeleitet. In Block 26 wird mit dem Einzeldejustagewert d_alpha_traj und der zugehörigen Qualitätszahl q_traj geprüft, ob die Bedingung

$$F2(d\_alpha\_traj, q\_traj) > q\_alpha\_traj\_max$$

erfüllt ist. Ist dies der Fall, ist der Fehler größer als erlaubt und es wird der Abschaltwunsch an Block 27 weitergeleitet. Erhält Block 27 mindestens einen Abschaltwunsch von einem der Blöcke 24, 25 oder 26, so wird an Block 29 weitergeleitet, dass das Abstands- und Geschwindigkeitsregelsystem abgeschaltet werden soll.

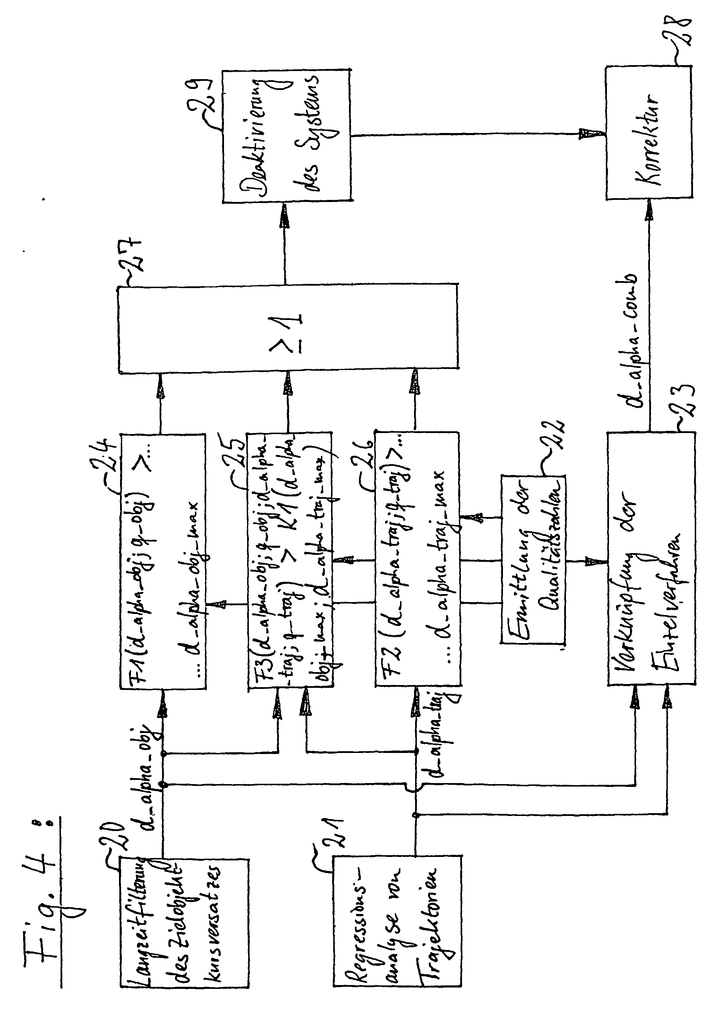

In Fig.4 ist ein weiteres erfindungsgemäßes Ausführungsbeispiel abgebildet. Dieses besteht aus sämtlichen, in Fig.3 beschriebenen Teilen, wurde aber noch zusätzlich ergänzt. So ist nun Block 23 neu hinzugekommen. Block 23 erhält die beiden Einzeldejustagewerte d_alpha_obj und d_alpha_traj sowie die zugehörigen Qualitätszahlen q_obj und q_traj. Im Block 23 wird aus diesen Werten ein verknüpfter Dejustagewert d_alpha_comb aus den Einzeldejustagewerten gebildet. Dieser so erzeugte Wert d_alpha_comb wird daraufhin an den ebenfalls neu hinzugekommenen Block 28 weitergegeben, wo die Korrektur der Hauptstrahlrichtung der Strahlungscharakteristik vorgenommen wird. Wird Funktionsblock 28 ein Abschaltwunsch mitgeteilt, so veranlasst dieser die Deaktivierung der Korrektur und Deaktiviert auch das gesamte Abstands- und Geschwindigkeitsregelsystem.

Die Werte d_alpha_obj_max sowie d_alpha_traj_max können konstante Werte sein, dies können aber auch Funktionen sein, die anschaulich in Fig.2 als beliebige Geraden dargestellt werden oder aber als beliebig gebogene Kurven aussehen können.

Bei einer Systemdeaktivierung sind mehrere Varianten denkbar. So kann die Abschaltung der Fahrzeugregelung zweckmäßigerweise nur so lange beibehalten werden, wie Dejustagewerte in einem korrigierbaren Bereich liegen, also Block 27 mindestens einen Abschaltwunsch erhält oder, es kann so lange abgeschaltet werden, bis das Fahrzeug das nächste Mal gestartet wird und eine befundlose Selbstdiagnose durchgeführt wurde oder aber es wird so lange eine Deaktivierung beibehalten bis diese Fehlermeldung, die in einem nichtfluchtigen Speicher gespeichert wird, in einer Werkstätte zurückgesetzt wird.

Die Korrektur des Sensorsichtbereiches kann auch auf unterschiedliche Arten geschehen. Eine Möglichkeit ist, den festgestellten verknüpften Dejustagewinkelwert auf alle gemessenen Winkelwerte zu addieren, so daß das neue Sensorsichtfeld rechnerisch in die korrekte Lage geschwenkt wird. Eine andere Möglichkeit sieht vor, den Rand des Sensorsichtbereiches, der auf der Seite liegt, in dessen Richtung die Symmetrieachse des Sichtbereiches verschoben ist, so lange zur Mitte hin zu verschieben, bis die Symmetrieachse des Sensorsichtbereiches mit der Fahrzeugmittelachse identisch ist. Dies hätte den Nachteil, daß bei jeder Korrektur der Sensorsichtbereich kleiner wird und nach einiger Betriebszeit nicht mehr vorhanden ist.

Zusätzlich zur Überwachung der Sensorjustage kann man noch die Sensorhardware überwachen. Bei bestimmten Kombinationen der Einzeldejustagewerte (d_alpha_obj; d_alpha_traj) kann man aufgrund gemachter Erfahrungen auf spezielle Defekte in der Hardware des Sensors schließen. Treten diese Kombinationen auf, so muß das Regelsystem aufgrund eines möglichen Hardwaredefektes abgeschaltet werden.

Durch die Verknüpfung mehrerer Verfahren ist es zum einen möglich, mit größerer Wahrscheinlichkeit festzustellen, dass der ermittelte Korrekturwert der tatsächlichen Sensorfehlstellung entspricht als bei Verwendung eines Einzelverfahrens, wodurch ein robustes Überwachungsverfahren sichergestellt ist und desweiteren ist es auch möglich, Teile der Sensorhardware auf deren Funktionieren hin zu überwachen.

**Patentansprüche**

1. Verfahren zum Ermitteln einer Fehlausrichtung der Strahlungscharakteristik eines Sensors zur Geschwindigkeits- und Abstandsregelung eines Fahrzeugs bezüglich der Fahrzeuglängsachse (8), wobei der momentan vorliegende Fahrzustand erfaßt wird, **dadurch gekennzeichnet, dass** mindestens zwei unterschiedlich ausgeprägte Einzelverfahren (20,21) zur Ermittlung der Fehlausrichtung verwendet werden, indem die Dejustagewerte der Einzelverfahren (d_alpha_obj, d_alpha_traj) miteinander zu einem verknüpften Dejustagewert (d_F3_comb) verknüpft werden und die Dejustagewerte der Einzelverfahren (d_alpha_obj, d_alpha_traj) dazu mittels Qualitätszahlen (q_traj, q_obj), die aus dem momentanen Fahrzustand gebildet werden, gewichtet werden,

und das Abstands- und Geschwindigkeitsregelsystem abgeschaltet wird, wenn

- der verknüpfte Dejustagewert (d_F3_comb) betragsmäßig größer als ein zugeordneter, vorgebbarer Grenzwert ist oder
- wenn einer der Dejustagewerte der beiden Einzelverfahren (d_alpha_obj, d_alpha_traj), der mittels der jeweiligen Qualitätszahl (q_obj, q_traj) gewichtet wurde (F1, F2) betragsmäßig größer als ein jeweils zugeordneter, vorgegebener Grenzwert (d_alpha_obj_max, d_atpha_traj_max) ist.

2. Verfahren nach Anspruch 1, **dadurch gekennzeichnet, dass**
eines der Einzelverfahren derart ausgebildet ist, dass ein Dejustagewert (d_alpha_obj) mittels einer zeitlichen Mittelwertbildung über den aktuellen Zielobjektwinkel zur Fahrzeugmittelachse, ermittelt wird (20),
und
dass ein weiteres der Einzelverfahren derart ausgebildet ist, dass ein weiterer Dejustagewert (d_alpha_traj) mittels eines Trajektorienverfahrens, bei dem die relative Objektpositionsveränderung von erkannten, vorzugsweise von stehenden Rückstreuobjekten, unter Zuhilfenahme der Fahrzeugeigengeschwindigkeit zur Ermittlung der lateralen Objektrelativgeschwindigkeit in Bezug auf die Fahrzeugmittelachse, verwendet wird (21).

3. Verfahren nach Anspruch 1, **dadurch gekenn-**

**zeichnet, dass** bei Überschreiten eines der Grenzwerte das Geschwindigkeits- und Abstandsregelungssystem deaktiviert wird und

- eine Aktivierung des Systems solange unterbunden wird, bis die Dejustagewerte der Einzelverfahren und der verknüpfte Dejustagewert innerhalb eines zulässigen Fehlerbereichs liegen

oder

- eine Aktivierung solange unterbunden wird, bis die Zündung des Fahrzeugs erneut eingeschaltet und eine befundlose Selbstdiagnose durchgeführt wurde

oder

- das System diesen Deaktivierungszustand nichtflüchtig speichert und eine Aktivierung des Systems solange unterbunden wird, bis der nichtflüchtig gespeicherte Deaktivierungszustand zurückgesetzt wird.

4. Verfahren nach Anspruch 1, **dadurch gekennzeichnet, dass** bei bestimmten Kombinationen von Dejustagewerten der Einzelverfahren oder von Qualitätszahlen auf spezielle Defekte der Sensorhardware geschlossen wird.

**Claims**

1. Method for determining a misalignment of the radiation characteristic of a sensor for regulating the velocity and inter-vehicle distance of a vehicle with respect to the longitudinal axis (8) of the vehicle, the driving state which is present at a particular time being sensed, **characterized in that** at least two differently formulated individual methods (20, 21) are used to determine the misalignment by logically linking the maladjustment values of the individual methods (d_alpha_obj, d_alpha_traj) to one another to form a logically linked misadjustment value (d_F3), and the maladjustment values of the individual methods (d_alpha_obj, d_alpha_traj) are weighted for this purpose by means of quality numbers (q_traj, q_obj), which are formed from the instantaneous driving state, and the inter-vehicle distance and velocity regulating system is switched off if

- the logically linked maladjustment value (d_F3) is larger in absolute terms than an assigned predefinable limiting value or
- if one of the maladjustment values of the two individual methods (d_alpha_obj, d_alpha_traj) which has been weighted by means of the respective quality number (q_obj, q_traj) (F1, F2) is larger in absolute terms than a respectively assigned predefined limiting value (d_alpha_obj_max, d_alpha_traj_max).

2. Method according to Claim 1, **characterized in that** one of the individual methods is embodied in such a way that a maladjustment value (d_alpha_obj) is determined (20) by forming averages over time over the current angle of the target object with respect to the central axis of the vehicle, and **in that** a further method of the individual methods is conceived in such a way that a further maladjustment value (d_alpha_traj) is acquired by means of a trajectory method in which the relative change in the object position of detected objects, preferably stationary back-scattering objects, is used (21) with the aid of the vehicle's own velocity to determine the lateral relative velocity of the object with respect to the central axis of the vehicle.

3. Method according to Claim 1, **characterized in that**, when one of the limiting values is exceeded, the velocity and inter-vehicle distance regulating system is deactivated and

- activation of the system is prohibited until the maladjustment values of the individual methods and the logically linked maladjustment value lie within a permissible fault range

or

- activation is prohibited until the ignition of the vehicle has been switched on again and a faultless self-diagnosis has been carried out

or

- the system stores this deactivation state in a non-volatile fashion and activation of the system is prohibited until the deactivation state which has been stored in a non-volatile fashion is reset.

4. Method according to Claim 1, **characterized in that** when there are specific combinations of maladjustment values of the individual methods or of quality numbers it is concluded that there are specific defects in the sensor hardware.

**Revendications**

1. Procédé pour déterminer un désalignement de la caractéristique de rayonnement d'un capteur de régulation de vitesse et de distance d'un véhicule par rapport à l'axe longitudinal (8) du véhicule, selon lequel on détecte l'état de roulage instantané, **caractérisé en ce qu'**
on utilise au moins deux procédés séparés (20, 21) accentués différemment pour déterminer le désalignement en combinant les valeurs de désalignement des procédés séparés (d-alpha-obj, d-alpha-traj), pour former une valeur de désalignement combinée (d-alpha-comb) et en pondérant les valeurs de désalignement des procédés séparés (d-alpha-obj, d-alpha-traj) à l'aide d'indices de qualité (q-traj, q-obj) que l'on forme à partir de l'état de roulage instantané,
et on coupe le système de régulation de distance et de vitesse si :

- la valeur de désalignement combinée (d-alpha-comb) a une amplitude supérieure à une valeur limite prédéterminée, associée ou
- si l'une des valeurs de désalignement des deux procédés séparés (d-alpha-obj, d-$\alpha$-traj), qui ont été pondérés par les indices de qualité respectifs (q-obj, q-traj), (d-alpha-obj, d-alpha-traj), ont une amplitude supérieure à une valeur limite prédéfinie (d-alpha-obj-max, d-alpha-traj-max), associée.

2. Procédé selon la revendication 1,
   **caractérisé en ce qu'**
   on réalise l'un des procédés séparés en déterminant une valeur de désalignement (d-alpha-obj) en formant une valeur moyenne dans le temps pour l'angle de l'objet cible, actuel, par rapport à l'angle longitudinal du véhicule (20) et
   on réalise l'autre des procédés séparés **en ce qu'**on utilise (21) une autre valeur de désalignement (d-$\alpha$-traj) par un procédé orienté sur la trajectoire selon lequel on exploite la variation de position relative de l'objet par rapport à celle d'objets reconnus, de préférence fixes et rétroréfléchissants, à l'aide de la vitesse propre du véhicule pour déterminer la vitesse latérale relative de l'objet par rapport à l'axe longitudinal du véhicule.

3. Procédé selon la revendication 1,
   **caractérisé en ce qu'**
   en cas de dépassement de l'une des valeurs limites, le système de régulation de vitesse et de distance est neutralisé, et

- la mise en route du système est interdite jusqu'à ce que les valeurs de désalignement des différents procédés et valeurs de désalignement combinées se situent à l'intérieur d'une plage d'erreur autorisée, ou
- la mise en oeuvre est interdite jusqu'à ce que l'allumage du véhicule soit de nouveau actionné et qu'un diagnostic automatique a été effectué sans trouver de défaut, ou
- le système enregistre cet état de neutralisation d'une manière non volatile et interdit une mise en oeuvre du système jusqu'à ce que l'état de neutralisation enregistré d'une manière non volatile soit remis à l'état initial.

4. Procédé selon la revendication 1,
   **caractérisé en ce que**
   pour certaines combinaisons de valeurs de désalignement des procédés séparés ou de numéros de qualité, on conclut à des défauts particuliers des circuits de capteur.

Fig. 1

13

15

19

Funktions -

II I
III IV

14

12

bereich

erweiterter
Abschaltbereich

17

18

16

Abschaltbereich

Fig. 2

Fig. 3:

# Fig. 4 :

Langzeitfilterung des Zielobjekt-kursversatzes ~20

d_alpha_obj

F1(d_alpha_obj; q_obj) > ... ... d_alpha_obj_max ~24

F3(d_alpha_obj; q_obj; d_alpha-traj; q_traj) > K1(d_alpha_obj_max; d_alpha-traj_max) ~25

Regressions-analyse von Trajektorien ~21

d_alpha_traj

F2 (d_alpha-traj; q_traj) > ... ... d_alpha_traj_max ~26

Ermittlung der Qualitätszahlen ~22

≥ 1 ~27

Deaktivierung des Systems ~29

Verknüpfung der Einzelverfahren ~23

d_alpha-comb

Korrektur ~28

EP 1 277 062 B1